# EUROPEAN PATENT SPECIFICATION

(11) **EP 0 984 045 B1**
(45) Date of publication and mention of the grant of the patent: **01.09.2004**
(21) Application number: 98116822.2
(22) Date of filing: 04.09.1998
(51) Int. Cl.: C09D 11/00, C09D 11/10, C09B 67/00, C09B 69/00

(54) **Energy curable inks incorporating grafted pigments**
Energiehärtbare Druckfarben mit gepfropften Pigmenten
Encres durcissables par une énergie contenant des pigments greffés

(43) Date of publication of application: 08.03.2000
(73) Proprietor: SUN CHEMICAL CORPORATION, Fort Lee, NJ 07024 (US)
(72) Inventor: Laksin, Mikhail, Scotch Plains, New Jersey 07076 (US); Schwartz, Russell, Cincinnati, Ohio 45232 (US); Chatterjee, Subhankar, Hampton, New Jersey 08827 (US); Merchak, Paul A., Loveland, Ohio 45140 (US)
(74) Representative: VOSSIUS & PARTNER

(56) References cited:
- WO-A-92/13911
- DE-A- 19 500 968
- US-A- 4 946 508
- US-A- 4 946 509
- US-A- 5 024 698
- US-A- 5 062 894
- US-A- 5 176 745

## Description

This invention relates to low viscosity inks for use in printing. More particularly, the invention relates to inks which are energy curable by electron beams (EB) or ultraviolet (UV) radiation and the like.

Low viscosity and good flow are the most important factors affecting liquid ink behavior and improved printability. These factors are particularly important for formulating inks for gravure and flexographic printing. Schwartz et al. in U.S. Patent 4,468,255, disclose rheology modifiers for arylide yellow pigment dispersions. The rheology modifiers which are derived from diarylide pigments improve the fluidity of nonaqueous arylide pigment dispersions prepared from either monoarylide or diarylide yellow pigments. Schwartz et al. in a series of patents (i.e., U.S. Patents 4,946,508; 4,946,509; 5.024698; and 5,062,894) have disclosed modified azo pigments for use in conventional, solvent and water based inks and coatings to function as rheology control agents. In each of these patents, Schwartz et al. modify an azo pigment (e.g., a diarylide pigment, a monoazo pigment, a disazo pyrazolone pigment and the like) by grafting a polyalkylene oxide to the pigment so that water based inks made from these pigment compositions exhibit high coloring strength, cleaner shades, lower rheology, and enhanced gloss compared with conventional water based inks.

To increase printing throughput, UV or EB curable inks have been developed that allow printers to reduce the solvent content of the ink. It is always a challenging task for a UV or EB curable liquid ink formulator to develop ink formulations with a viscosity low enough for improved flow, while at the same time maintaining other essential characteristics, such as to cure, adhesion, low odor, etc. Traditional organic and inorganic pigments used in formulating energy curable liquid inks, are poorly dispersed in the vehicles used in the systems. As a result, poor pigment wetting leads to a thixotropic structure. If the inks are not subjected to high shear, the apparent viscosity will remain high and the ink will exhibit poor transfer resulting in poor printability. Flow additives have been tried, however, with limited success for different pigments. The situation becomes more critical in the case of cationic curable inks, where not all the pigments and additives can be used due to the presence of basic functionalities. In addition, some energy curable inks of the prior art contain fugitive solvent (such as water, alcohols and the like) as part of the vehicle to reduce viscosity, aid in pigment dispersion, and modify flow during printing. However, after printing but before curing, the fugitive solvent is typically removed to prevent interference with the curing process and to prevent it from having an adverse affect on the printed image. The curing delay required by solvent removal, as well as attendant unpleasant odors, are further undesirable limitations to printing. Furthermore, solvent removal is desirable for environmental reasons.

A UV-cured cationically polymerized printing ink is disclosed by Seng in Patent Application DE 195 00 968.1 for use in indirect letterpress printing or dry offset printing. Seng lists the differences between letterpress and flexographic printing and the list includes critical differences in ink viscosities. In particular, Seng discloses that printing inks used in flexographic printing have viscosities in the range of 0.01 to 2 Pa•s and at 20°C in the range of 3.0 to 100.0 Pa•s , and more preferably in the range of 4.0 to 10 Pa•s. Seng's inks are cationically polymerized and differ from the very high viscosity printing inks used in indirect letterpress printing in solvent content. While inks of this viscosity range are useful in high shear, indirect letterpress printing, such inks have high tack which causes them to be unsuitable for low shear applications such as flexography, which requires low tack inks.

Although improvements have been made in energy curable, cationic ink formulations, there continues to be a need for energy curable ink formulations (including free radical initiated curable formulations) which have a high color strength, cleaner shade and enhanced gloss but retain a very low viscosity as required by certain modes of printing.

The invention is an energy curable ink comprising a pigment, a Theological additive having the structure:

P-(U-Y)ₛ

wherein P is the residue of an organic colorant, Y is a polyalkylene oxide moiety, U is a linking moiety covalently bonding Y to P and s is an integer from 1 to 3; and an energy curable liquid vehicle; wherein the ink is substantially free of fugitive solvent.

In another embodiment of this invention, this energy curable ink further comprises a polymerization initiating system activatable by actinic radiation.

In yet a further embodiment of this invention there is a method of printing and curing an ink comprising the steps:
(I) providing the energy curable ink described supra;
(II) printing the ink onto a substrate surface to form the ink image; and
(III) subjecting the ink image to actinic radiation or thermal energy to form a cured ink image.

The present invention is directed to a novel solvent-free, energy curable ink for use in printing applications which require low to very low viscosity inks. The term "energy curable or cured" as used herein, in reference to ink means an ink which can be cured, hardened, polymerized, or crosslinked by the action of actinic radiation such as UV or EB radiation and the like from a radiant energy source; or from a thermal energy source by heating with a conductive or radiant heat source such as a platen, an oven, infrared (IR), microwave, and the like.

The energy curable ink of this invention comprises a pigment composition and an energy curable liquid vehicle is substantially free of a fugitive solvent. The terms "substantially free of fugitive solvent" and "solvent-free", as used herein in reference to inks, means free of a liquid component (e.g., water, lower alcohols, alkanes, aromatics, aliphatics, ketones, acetates and the like) which, after printing, is evaporated, imbibed into a substrate surface, or both, and does not remain as an essential component of the cured ink. Further, these terms are not intended to exclude trace or residual solvents resulting from the manufacture of ink components prior to ink formulation.

The term "colorant", as used herein means an organic pigment or dyestuff. The energy curable liquid vehicle typically comprises one or more low molecular weight mono- or multi-functional monomers. For offset inks and other inks which require higher viscosities, a resin, a reactive oligomer or polymer may also be present. The inks of the present invention may be cured thermally or by actinic radiation sources, such as electron beams and the like; or photolytically cured by actinic radiation, such as UV radiation and the like, when a suitable initiating system is incorporated into the ink. The solvent-free, energy curable inks of this invention are more fully described in the following examples.

### Pigment

The pigment is any organic pigment that can be employed for the coloration of conventional printing inks of the prior art. The pigment may also be carbon black. Pigments suitable for use in the present invention may be any conventional organic pigment such as: Pigment Yellow 1, Pigment Yellow 3, Pigment Yellow 12, Pigment Yellow 13, Pigment Yellow 14, Pigment Yellow 17, Pigment Yellow 37, Pigment Yellow 63, Pigment Yellow 65, Pigment Yellow 73, Pigment Yellow 74, Pigment Yellow 75, Pigment Yellow 83, Pigment Yellow 97, Pigment Yellow 98, Pigment Yellow 106, Pigment Yellow 114, Pigment Yellow 121, Pigment Yellow 126, Pigment Yellow 127, Pigment Yellow 136, Pigment Yellow 174, Pigment Yellow 176, Pigment Yellow 188, Pigment Orange 5, Pigment Orange 13, Pigment Orange 16, Pigment Orange 34, Pigment Red 2, Pigment Red 9, Pigment Red 14, Pigment Red 17, Pigment Red 22, Pigment Red 23, Pigment Red 37, Pigment Red 38, Pigment Red 41, Pigment Red 42, Pigment Red 112, Pigment Red 146, Pigment Red 170, Pigment Red 196, Pigment Red 210, Pigment Red 238, Pigment Blue 15, Pigment Blue 15:1, Pigment Blue 15:2, Pigment Blue 15:3, Pigment Blue 15:4, Pigment Green 7, Pigment Green 36, Pigment Violet 23, or carbon black, including Pigment Black 7 and the like.

### Rheological Additive

The rheological additive is a polyalkylene oxide covalently bonded (i.e. grafted) to the residue of an organic colorant and has the structure P-(U-Y)ₛ, in which P is the residue of an organic colorant, Y is a polyalkylene oxide moiety preferably containing about 4 to about 400 alkylene oxide repeat units, and U is a linking moiety covalently bonding Y to P and s is an integer from 1 to 3. Typically, P is a residue of a pigment, such as, a residue of an azo pigment, phthalocyanine pigment, dioxazine pigment, quinacridone pigment, perylene pigment, perinone pigment or the like. Preferably, P is the residue of a diarylide pigment, monoazo pigment, disazo pyrazolone pigment, phthalocyanine pigment, or perylene pigment.

The polyalkylene oxide moiety, Y, may be the residue of any polyalkylene oxide such as an ethylene oxide polymer, an ethylene oxide/propylene oxide copolymer and the like. Preferably, Y is an alkylene oxide copolymer having the general formula: 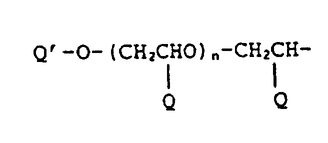 wherein n is about 4 to about 400 and more preferably is about 4 to about 60; each Q is independently H or CH₃
and Q' is a C₁-C₆ alkyl moiety. The weight average molecular weight of the polyalkylene oxide moiety typically is between about 300 and 3,600; and preferably between about 1,000 and 3,000. The polyalkylene oxide moiety, Y, may be grafted to the residue of an organic colorant, P, through a linking moiety, U, which is preferably a covalent bond or multivalent moiety such as C₁-C₆ alkyl, -NHSO₂-, -O-, -CO-, -COO-, -N-, -CONH-, and the like. It is understood that the particular linking moiety employed will be determined by those skilled in the art depending on the nature of P.

Combinations of pigment and rheological additive particularly useful in the solvent free energy curable inks of the invention are described in U.S. Patents 4,946,508; 4,946,509; 5,024,698; and 5,062,894; each of which is incorporated herein by reference.

In particular, Schwartz et al, U.S. Patent 4,946,508 discloses disazo pyrazolone compositions which contain said rheological additives and their method of manufacture. Such disazo pyrazolone pigment compositions have the general formula: 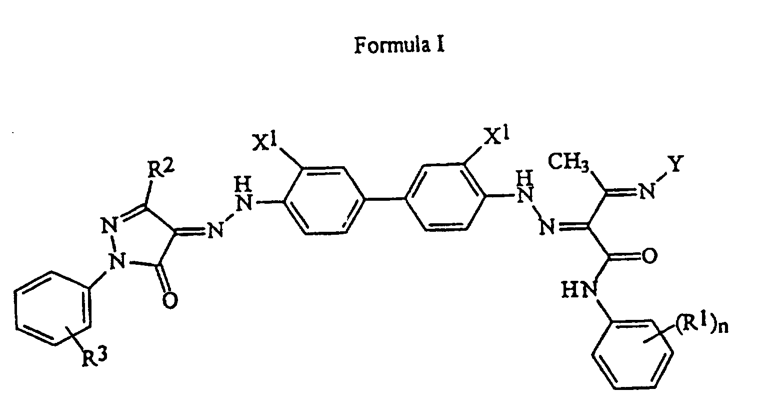 wherein Y is the polyalkylene oxide moiety; R¹ is H, CH₃, OCH₃, OCH₂CH₃ or Cl; n is selected from an integer from 1 to 5; R² is CH₃ or COOCH₂CH₃; R³ is H or CH₃; and X¹ is Cl or OCH₃

U. S. Patent 4,946,509, Schwartz et al discloses azomethine compositions and their method of manufacture. Such azomethine pigment compositions have the general formula: 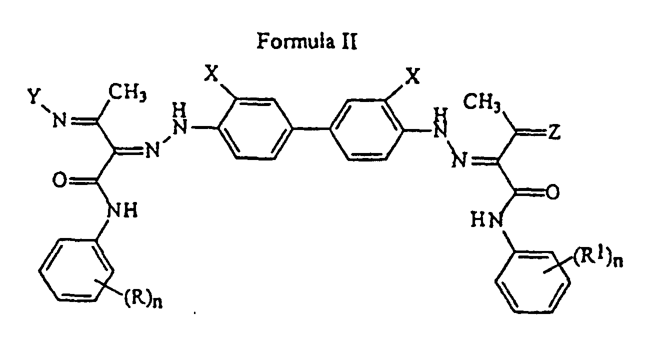 wherein Y is the polyalkylene oxide moiety containing about 4 to about 200 groups; R and R¹ are independently selected from the group consisting of H, CH₃, OCH₃, OCH₂CH₃ and Cl; n is selected from an integer from 1 to 5; X is selected from the group consisting of Cl, CH3, and OCH3; and Z is selected from 0 and N-Y.

U.S. Patent 5,024,698, Schwartz et al discloses monoazomethine compositions and their method of manufacture. Such monoazomethine pigments have the general formula: 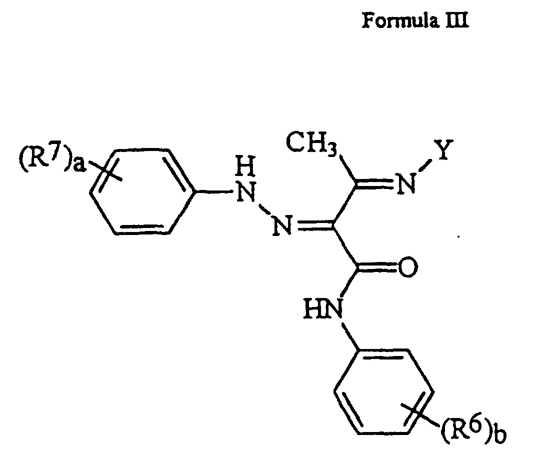 wherein Y is the polyalkylene oxide moiety; R⁶ is independently selected from the group consisting of Cl, OCH₃, CH₃, OC₂H₅, C₂H₅, and CONH₂ ; R⁷ is independently selected from the group consisting of Cl, OCH₃, CH₃, NO₂, OC₂H₅, C₂H₅, CONH₂, SO₃H, OH and COOH; and a and b are independently selected from integers 0 to 5.

U.S. Patent 5,062,894, Schwartz et al discloses diarylide compositions and their method of manufacture. Such diarylide pigment compositions have the general formula: 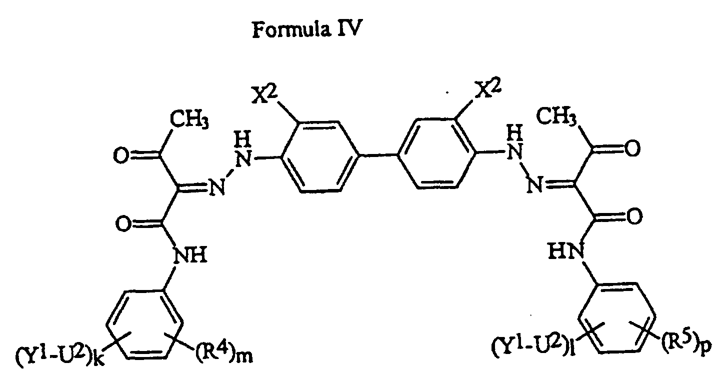 wherein R⁴ and R⁵ are independently selected from the group consisting of C₁-C₄ alkyl, C₁-C₄ alkoxy, and halogen; m and p are independently selected from integers of 0 to 5; X² is selected from the group consisting of Cl, CH₃, and OCH₃; U² comprises a divalent bridging moiety selected from the group consisting of C₁-C₆ alkyl, -NHSO₂-- 0-, -CO-, -COO-, and -CONH-; Y¹ comprises the polyalkylene oxide moiety having a number average molecular weight of about 200 to 10, 000; and k and l are independently selected from integers 0 or 1, with the proviso that for at least 50 wt.% of the composition, k and 1 are both 0, and for at least 3 wt.% of the composition k and/or l are 1.

Other rheological additives particularly useful in the energy curable inks of this invention, include phthalocyanine compositions having the P-U-Y structure in which P, is the residue of a copper phthalocyanine pigment and wherein the linking moiety, U, is -NHSO₂-
which joins P to Y. Such copper phthalocyanine based rheological additives have the general formula: 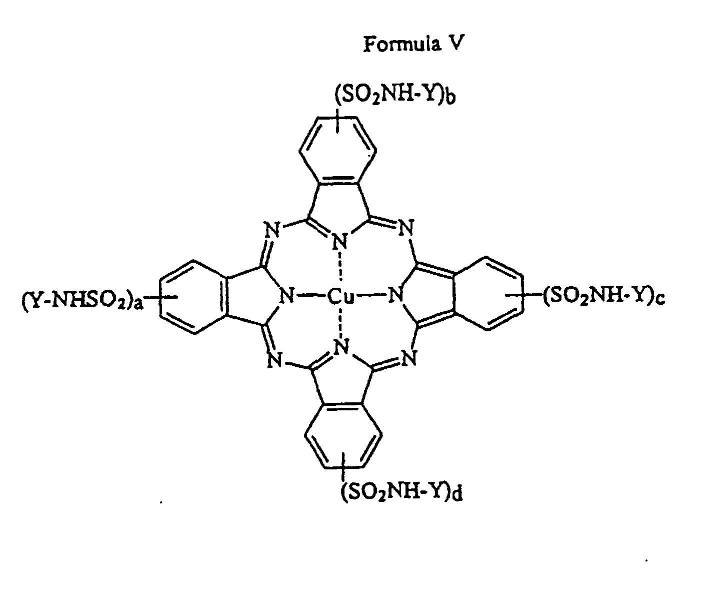 wherein Y is a polyalkylene oxide moiety which has the general formula: 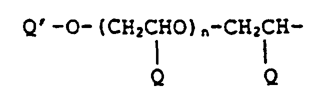 wherein n is about 4 to about 400, and a, b, c and d are integers independently from 0 to 4, provided at least one of them is 1; Q is selected from H, CH₃ or a combination thereof; and Q' is a C₁-C₆ alkyl moiety.

The rheological additive used in this invention may be prepared by any conventional method. Illustrative methods for preparing the pigments with the rheological additives described herein are disclosed in U.S. Patents 4,946,508; 4,946,509; 5,024,698;and 5,062,894 and in the examples.

The pigment compositions used in this invention typically contain a minor portion of said rheological additive and a major portion of the conventional pigment. The residue of the organic colorant that is contained in the rheological additive does not need to be of the same type as the pigment of the ink formulation. For example, the additive of Formula V may be utilized with Pigment Violet 23 or Pigment Black 7.

An advantage of the preparation methods disclosed in the Schwartz et al. patents supra, is that a blend of the colorant additive and the pigment is produced directly, and may be used without further blending. To produce printing inks with a desired hue, a separate pigment may be added which is distinct from the pigment and rheological additive. Methods of effecting a desired hue from precursor pigments are well known to the ink formulator and are illustrated in the examples.

### Energy Curable Liquid Vehicle

The solvent-free, energy curable ink of this invention contains as the third essential component a quantity of an energy curable liquid vehicle which is substantially free of fugitive solvent. The quantity of liquid vehicle employed is an amount sufficient to make up 100% of the ink weight when taken together with other ink components. The radiation curable liquid vehicle typically comprises one or more low molecular weight mono-functional or multi-functional monomers. For offset inks and other inks which require higher viscosities, a resin, a reactive oligomer or polymer may also be present. These components may react with the monomers upon curing. The energy curable liquid vehicle is characterized in that it is curable to a solid by exposure to energy from a radiant or thermal energy source as described supra. The liquid vehicle may be cured to a solid by exposure to energy, such as exposure to high energy electrons from an electron beam source. Alternatively, curing of the liquid vehicle may be initiated by energy activation of a polymerization initiating system (e.g., by UV radiation) as will be described in detail hereinbelow. In this context, a polymerization initiating system may be considered an optional component of the energy curable liquid vehicle. The liquid vehicle may be a ring opening polymerizable composition, a free radical addition polymerizable composition, or by a combination of ring opening and free radical polymerization. In either composition, the liquid vehicle is cured or hardened by polymerizing and/or crosslinking, at least the reactive monomers of the liquid vehicle. In order to reduce environmental contamination and maintain formulation integrity, the liquid vehicle is typically formulated with components having low volatility under ambient printing conditions.

When the liquid vehicle is a ring opening polymerizable composition, upon energy initiation it forms a polymer typically bound by ester, or ether linkages.

In a preferred embodiment of the invention the polymerizable composition is a cationic polymerizable system comprising one or more mono-functional or multi-functional epoxides. The liquid vehicles typically contain at least one cycloaliphatic epoxide. Examples of such cycloaliphatic epoxides are adducts of epoxides and hydroxyl components such as glycols, polyols, or vinyl ether, such as 3,4-epoxycylohexylmethyl 3,4-epoxycylohexane carboxylate; bis(3,4-epoxycylohexylmethyl)adipate; limonene monoepoxide; limonene diepoxide; diglycidyl ester of hexahydrophthalic acid; 1-vinyl-3,4-epoxycyclohexane; epoxidated dicyclopentyl alcohol; or a mixture thereof. A preferred cycloaliphatic epoxide of this type is 3,4epoxycyclohexylmethyl -3,4-epoxycyclohexylcarboxylate. In addition to the cycloaliphatic epoxides there may be one or more noncycloaliphatic epoxides, such as di- or tri- glycidyl ether, alkoxylated bisphenol A, 1,6-hexane diol, glycerol; neopentylglycol; or trimethylolpropane. The epoxy diluent likewise may be diglycidyl ether of bisphenol A; an alpha-olefin epoxide, a Novalac epoxide, epoxidated linseed oil, soy oil; epoxidated polybutadiene; 1,2-epoxydecane; caprolactone triol; glycidyl ether; alkyl glycidylether; epoxidated silanes; 2-ethylhexylglycidyl ether. In such epoxy compositions, the ink typically contains a cationic initiating system activatable by actinic radiation as will be described hereinbelow.
and the like. A preferred epoxy diluent is 2-ethylhexyglycidyl ether. In such epoxy compositions, the ink typically contains a cationic initiating system activatable by actinic radiation as will be described hereinbelow.

When the energy curable liquid vehicle is a free radical addition polymerizable composition, the vehicle comprises a liquid compound having terminal ethylenic unsaturation.

Typically, the liquid vehicle is a free radical addition polymerizable system comprising an ethylenically unsaturated mono- or multi-functional monomer. The monomer is a lower molecular weight ethylenically unsaturated compound which forms a polymer directly upon initiation by free radicals generated by absorbed energy. In some formulations an oligomeric or polymeric component which can be further polymerized may also be present. In such cases the further polymerizable material will be soluble in, or dispersible in the monomer vehicle.

Typically, the monomeric compounds have one, two, or more terminal ethylenically unsaturated groups. Representative of such monomeric compounds are: N-vinyl pyrrolidinone; dipropylene glycol diacrylate; tripropylene glycol diacrylate; butanediol diacrylate; hexanediol diacrylate; trimethylol propane triacrylate; ethoxylated trimethylol propane triacrylate; glycerolpropoxy triacrylate; pentaerythritrol triacrylate; dipropylene glycol dimethacrylate; tripropylene glycol dimethacrylate; butanediol dimethacrylate; hexanediol dimethacrylate; trimethylol propane trimethacrylate; di-(3-methacryloxy-2-hydroxypropyl ether of bisphenol-A; di(2methacryloxyethyl ether of bisphenol-A; di-(3-acryloxy-2-hydroxypropyl ether of bisphenol-A; di(2-acryloxyethyl ether of bisphenol-A; and the like.

To achieve the desired ink viscosity and crosslinking properties, typically the monomer composition contains a combination of diacrylic and triacrylic monomers along with a monomer containing a single terminal ethylenic group, as illustrated in the examples which follow.

When the inks of this invention contain an oligomeric or polymeric material, said materials typically possess ethylenic unsaturation which can react with the ethylenically unsaturated monomers. Representative of such oligomers are acrylated epoxy resins; acrylated polyurethanes; acrylated polyesters; and the like.

The inks of the present invention may also contain a preformed polymer such as an acrylic polymer or copolymer of C₁-C₄ alkyl acrylates or methacrylates, or acrylic or methacrylic acid, vinyl polymers and copolymers such as polyvinyl chloride, polyvinyl acetate, polyvinyl alcohol, polyvinylpyrolidone, cellulosic polymers and copolymers; and the like.

### Polymerization Initiating System

Unless the ink is formulated specifically for use with EB or thermal curing, it will typically contain a polymerization initiating system activatable by actinic radiation, such as UV radiation. Such a photoinitiator system has one or more compounds that directly furnish cations or free radicals when activated by actinic radiation. The photoinitiator system may also contain a sensitizer that extends the spectral response into the ultraviolet, visible and near infrared spectral regions. Cationic polymerization photoinitiating systems typically are used to initiate ring opening polymerization in systems such as the epoxy compositions described herein. Such cationic photoinitiating systems include all substances which liberate Lewis acids or Brönsted acids upon exposure to actinic radiation such as UV radiation. Cationic photoinitiating systems which are particularly useful in the energy curable inks of this invention are arylsulfonium salts, especially the triarylsulfonium salt such as triarylsulfonium phosphate, triarylsulfonium antimonate, triphenylsulfonium hexafluorophosphate, and diarylsulfonium salt; and aryl-iodonium salts, such as diaryliodonium hexafluoroantimonate,bisdodecyldhenyliodonium hexafluoroantiminoate, and the like. Such cationic photoinitiators may be used individually or in combination to effect suitable curing of the ink. Preferred are diaryl-iodonium hexafluoroantimonate and (n⁵-2,4-cyclopentadien-1-yl) [(1,2,3,4,5,6-n) (1-methylethyl)benzene] -iron hexafluorophosphate.

In free radical initiated curing systems such as the UV curable inks disclosed herein,, typically irradiation of a photoinitiator produces free radicals that initiate polymerization. A wide variety of photoinitiators may be used in the energy curable inks of this invention a few are described by B.M. Monroe and G.C. Weed in Photoinitiators for Free-Radical-Initiated Photoimaging Systems, Chem. Rev. 93, pp. 435-448 (1993) incorporated thioxanthone, ethyl 4-(dimethylamino) benzoate, alpha amino acetophenone, and Michler's ketone.

### Adjuvants

The radiation curable inks of this invention may optionally contain the usual adjuvants to adjust ink flow, surface tension, surface penetration and gloss of the cured printed ink. Such adjuvants contained in the ink typically are a surface active agent, a wax, a humectant or a combination thereof. These adjuvants may function as leveling agents, wetting agents, dispersants, defrothers or deareators, or additional adjuvants may be 35 added to provide a specific function. Preferred herein by reference. Preferred are isopropyl adjuvants include fluorocarbon surfactants such as FC430, available from the 3M Company; silicones such as DC57, available from the Dow Chemical Corporation; polyethylene wax; polyamide wax; polytetrafluoroethylene wax; and the like.

### Printing Ink Formulation

The solvent-free, energy curable ink preferably contains as its essential ingredients typically about 2 to about 15% by weight of the ink of pigment, about .1 to about 10 % by weight of the ink of the rheological additive and the balance being the liquid energy curable vehicle which is substantially free of a fugitive solvent. The energy curable liquid vehicle typically comprises, one or more low molecular weight mono-functional or multi-functional monomers. For offset inks and other inks which require higher viscosities (>1,000 cps), a resin, a reactive oligomer or polymer may also be present. In addition to the essential ingredients the energy curable ink may also contain up to about 6 % by weight of the ink of the polymerization initiating system activatable by actinic radiation; and up to about 10 % or less by weight of the ink, of the surface active agent, a wax, humectant or combination thereof.

The primary advantage offered by the solvent-free, energy curable ink of this invention is that the rheology may be readily adjusted to provide an ink viscosity anywhere between about 3 cps and about 2,000 cps at 240 s⁻¹ and 25°C, simply by adjusting the ratio of the various types of monomer component, and/or by adjusting the ratio of pigment and rheological additive to liquid vehicle; and/or by adjusting both ratios.

The ink may be prepared by any conventional mixing and milling method typically used for preparing printing inks. Typically, the pigment and rheological additive are mixed with the liquid vehicle then milled. After milling additional liquid vehicle and any desirable adjuvants are optionally added and mixed to produce the energy curable ink. As indicated the above mentioned ratios are adjusted to achieve a printing ink with the desired viscosity, flow, color density, and curing characteristics. The ink formulation process is more fully described in the examples.

### Method of Printing and Curing

This invention is also directed to a method of printing and curing an ink image comprising the steps: (a) providing a solvent-free energy curable ink of this invention as described supra; (b) printing the ink on a substrate surface to form an image; and (c) subjecting the image to actinic radiation or thermal energy to form a cured ink image.

The method of this invention is particularly directed to printing operations requiring very low viscosity inks such as for example gravure and flexographic printing. It is understood, however, that any suitable printing and curing means may be used to print and cure the solvent-free energy curable ink of this invention. Such suitable means include but are not limited to conventional gravure or flexographic printing presses, equipped with UV and/or EB curing stations which follow the printing station. Thus when the energy curable ink is free of a photoinitiator it may be cured by actinic radiation which is a beam of electrons. Alternatively, when the energy curable ink contains a polymerization initiating system, it may be cured by actinic radiation which is UV radiation. The printed energy curable ink containing a polymerization initiating system may be initially subjected to UV radiation and subsequently to a beam of electrons or thermal energy to complete the cure. As used herein the thermal energy is intended to include radiant energy such infrared or microwave energy and the like; or conductive thermal energy such as that produced by a heated platen or hot air oven, for example.

The following examples illustrate specific aspects of the present invention and are not to limit the scope thereof in any respect and should not be so construed. In the following examples all percentages provided are in volume percent unless otherwise noted.

### Example 1

An energy curable, cationic ink formulation was formulated using a modified Pigment Yellow 12 composition containing Pigment Yellow 12 and Theological additive. 20 Modified Pigment Yellow 12 composition containing Pigment Yellow 12 and rheological additive was prepared as described in Example III of U.S. Patent 5,062,894. A mixture of 16.5 parts of isatoic anhydride (96% pure) and 220 parts of a primary amine-terminated poly (ethylene oxide/propylene oxide) (70/30) copolymer having a number average molecular weight of approximately 2,000 (available from the Huntsman Corporation) was stirred and heated gradually to 80'C until evolution of C0₂ ceased. The infrared spectrum indicated that the isatoic anhydride had completely reacted as evidenced by the disappearance of the characteristic anhydride absorptions at 1748 cm-¹ . Thereafter, 16.5 parts of t-butyl acetoacetate were added and the reaction mixture was heated at 95°C and stirred for 8 hours to form Agent 1.

Tetrazotized 3,3' 0-dichlorobenzidine (DCB) was then prepared by adding 21.7 parts DCB to 39.8 parts of 200 Be hydrochloric acid and 140 parts of ice/water mixture with constant stirring to form a homogenous suspension. 32.6 parts of a 38% solution of sodium nitrite was added to the suspension and stirring was continued for 1 hour 0-3°C . The excess nitrous acid was then destroyed by the addition of approximately 0.5 part sulfamic acid.

A fine suspension of coupler was prepared by charging 31.1 parts acetoacetanilide and 0.5 part phenylmethyl pyrazolone (a shading agent) to 400 parts water and 33.6 parts of 50% sodium hydroxide. The mixture was stirred until all solids were dissolved, then the temperature was adjusted between 0 and 5°C and thereafter the coupler was precipitated by slowly adding 36.2 parts of 70% acetic acid. Immediately prior to coupling, 20.6 parts of Agent 1 were added to the coupler suspension as stirring was maintained throughout coupler preparation and reaction.

Coupling was then carried out by adding the solution of tetrazotized DCB to the fine suspension of coupler over a 40 minute period while stirring until no excess tetrazotized DCB remained. Then the temperature was increased to 40°C. The resulting pigment slurry was stirred an additional 30 minutes, filtered, washed and dried in an oven at 75°C. (Yield 69 parts of Modified Pigment Yellow 12 composition containing Pigment Yellow 12 and rheological additive).

An energy curable, cationic ink was formulated from the following components.

| COMPONENTS | WEIGHT % |
|---|---|
| Cyracure® 6110^{(a)} , 6110^{(a)} | 65.5 |
| Modified Pigment Yellow 12 | 15 |
| CD 1012^{(b)} | 3 |
| Heloxy® 116^{(c)} | 15 |
| PE wax^{(d)} | 1 |
| DC^{(e)} | 5 |

| | |
|---|---|
| (a) Cyracure® 6110, available from the Union Carbide Corporation, is 3,4-epoxycyclohexylmethyl-3,4 epoxycyclohexylcarboxylate | |
| (b) CD 1012, available from the Sartomer Corporation, is diaryliodonium of hexafluoroantimonate | |
| (c) Heloxyo 1-16, available from the Shell Chemical Company, is 2-ethylhexylglycidyl ether, | |
| (d) PE wax, available from the Shamrock Corporation, is polyethylene wax | |
| (e) DC57, available from the Dow Chemical Corporation, is silicone additive | |

The Cyracure® 6110 and the Modified Pigment Yellow 12 were mixed at high speed (about 1000 rpm) with a Cowles blade then processed through a media mill containing 1 mm size media. After processing the remaining components were added and the viscosity of the two inks were measured.

| PIGMENT | VISCOSITY @ 25°C |
|---|---|
| Modified PY-12 | 300±50 cps at 240 s⁻¹ |
| Conventional PY-12 | 1500±200 cps at 240 s⁻¹ |

Printing runs were carried out with the modified ink on a F-1 printability tester from IGT Reprotest. The tester was equipped with a UV radiation unit and a lamp having an output of 200 Watt/inch in the UV spectral region and a cylindrical reflector. The major elements of the tester are: a plate cylinder with a replaceable photopolymer flexographic plate; an anilox roller for applying ink to the plate cylinder; a doctor blade assembly for regulating the ink supplied to the anilox roller; a rubber printing cylinder which along with the plate cylinder, forms a nip through which a substrate 5 carrier passes. The flexographic plate was an Epec® photopolymer plate a product of Polyfiberon. The substrate which was printed was polyester label film (available from Fasson) having a gloss of 67. When printing this film, the anilox roller was steel and had 80 line/cm and a cell volume 17.5 M¹/M². The inking pressure between the anilox and the plate was adjusted to be 250 N and the printing pressure between the plate and the printing cylinder was 250 N. The printing speed was 1 m/sec.

The following parameters were measured to assess the quality of the printed image: optical density was measured with an XRite® 418 densitometer; and gloss was measured with a BYK portable glossmeter at a 60° angle using the statistical mode. Using modified Pigment Yellow 12 ink composition, the ink was applied to the substrate and cured with this apparatus. A cured ink film was likewise printed using conventional Pigment Yellow 12 ink composition.

Color density and Gloss measurements were also carried out with the modified Pigment Yellow 12 and conventional Pigment Yellow 12 prints. The assessed quality using the two ink formulations were:

| PIGMENT | COLOR DENSITY | GLOSS 60° |
|---|---|---|
| Modified PY-12 | 1.44 | 87 |
| Conventional PY-12 | 1.00 | 59 |

The ink containing the modified Pigment Yellow 12 has 35 better transfer onto the substrate due to lower viscosity and better flow. As a result, the print has more uniform ink lay, higher density and gloss than does the ink containing the conventional pigment.

### Example 2

An energy curable, cationic ink formulation was formulated using a modified Pigment Blue 15.4 composition containing copper phthalocyanine blue pigment and Theological additive.

A rheological additive was prepared by charging a presscake, containing 210 parts by weight of copper phthalocyanine sulfonyl chloride (which may be prepared by any conventional method) into a mixture of 692 parts by weight of a primary amine-terminated poly (ethylene oxide/propylene oxide) (5/95) copolymer having a number average molecular weight of approximately 2,000 (available as XTJ 507 from the Huntsman Corporation) and 66 parts by weight of sodium carbonate and mixed. The final reaction mixture was then heated to 80-90°C under vacuum to remove water and produce the copper phthalocyanine additive.

The modified Pigment Blue 15.4 composition was prepared by combining 12 % by weight of the copper phthalocyanine derived rheological additive where P is the residue of copper phthalocyanine with 79% by weight of conventional Pigment Blue 15.4 during the attrition process step of the conventional pigment.

The energy curable, cationic ink was formulated from the following components.

| COMPONENTS | WEIGHT % |
|---|---|
| Cyracure® 6110^{(a)} | 15 |
| Modified Pigment Blue 15.4 | 5 |
| CD 1012^{(b)} | 2 |
| Irgacure® 261^{(f)} | .5 |
| DVE 3 ^{(g)} | 76 |
| PE wax ^{(d)} | 1 |
| DC 57 ^{(e)} | .5 |

| | |
|---|---|
| (f) Irgacure® 261, available from the Ciba Corporation, is {n⁵-2,4-cyclopentadien-1-yl)[(1,2,3,4,5,6-N)(1-methyl ethyl)benzene I-iron-hexafluorophosphate (-1) | |
| (g) DVE, available from the GAF Corporation, is triethylene- glycol divinyl ether | |

The Cyracure® 6110 and the modified Pigment Blue 15.4 were mixed at high speed (about 2000 rpm) with a Cowles blade and then processed through a media mill containing 1 mm size media. After processing the remaining components were added and the viscosity of the two inks were measured.

| PIGMENT | VISCOSITY @ 25°C |
|---|---|
| Modified PB-15.4 | 20±5 cps at 240 s-1 |
| Conventional PB-15.4 | 100±20 cps at 240 s-1 |

Printing runs were carried out with a gravure hand-proofer from Pamarco Inc. The major elements of the gravure hand-proofer are: a 300 line/inch (118 line/cm) anilox roller; and a doctor blade assembly for regulating the ink supplied to the anilox roller. The printed samples were passed through a UV curing unit from R.P.G. Industries having a lamp with an output of 400 Watts/inch in the UV spectral region and- a cylindrical reflector. The substrate which was printed was the polyester label film from Fasson. The printing speed was about 1 m/sec (200 ft./min.) Using modified Pigment Blue 15.4 ink composition, a uniform ink film was applied to the substrate with the hand proofer and cured with this curing unit. A cured uniform ink film was likewise printed using conventional Pigment Blue 15.4 ink composition.

Color density and gloss measurements as described in Example 1 were carried out with the modified and the conventional Pigment Blue 15.4 prints. The assessed quality using the two ink formulations were:

| PIGMENT | COLOR DENSITY | GLOSS 60° |
|---|---|---|
| Modified PB-15.4 | 1.4 | 90 |
| Conventional PB-15.4 | 1.1 | 70 |

The ink containing modified Pigment Blue 15.4 demonstrates more uniform lay and less reticulation than the ink containing the conventional pigment, which results in higher density and better gloss of the print.

### Example 3

An energy curable, cationic ink formulation was formulated using a modified Pigment Violet 23 composition containing Pigment Violet 23 and rheological additive.

Modified Pigment Violet 23 composition was prepared by combining 15 % by weight of the copper phthalocyanine derived rheological additive of Example 2 with 85% by weight of conventional Pigment Violet 23 during the attrition process step of the conventional pigment.

The energy curable, cationic ink was formulated from the following components.

| COMPONENTS | WEIGHT % |
|---|---|
| Cyracure® 6110^{(a)} | 26 |
| Modified Pigment Violet 23 | 8 |
| E6250^{(h)} | 60 |
| CD 1012^{(b)} | 5 |
| PE wax^{(d)} | 1 |
| DC 57^{(e)} | .5 |

| | |
|---|---|
| (h) E6250, available from the Hüls America Corporation, is (2-(3,4-epoxycyclo hexyl)-ethyltrimethoxysilane) | |

The Cyracure® 6110 and the modified Pigment Violet 23 were mixed at high speed (about 1000 rpm) with a Cowles blade and then processed through a media mill containing 1 rvm size media. After Processing the remaining components were added and the viscosity of the two inks were measured.

| PIGMENT | VISCOSITY @ 25°C |
|---|---|
| Modified PV-23 | 20±5 cps at 240 s⁻¹ |
| Conventional PV-23 | 150±50 cps at 240 s⁻¹ |

Printing runs, as describe in Example 2, were carried out with the modified Pigment Violet 23 and compared to conventional Pigment Violet 23. Color density and gloss measurements were carried out with the modified and conventional Pigment Violet 23 prints. The assessed quality using the two ink formulations were:

| PIGMENT | COLOR DENSITY | GLOSS 60° |
|---|---|---|
| Modified PV-23 | 2.34 | 75 |
| Conventional PV-23 | 1.88 | 46 |

Poor flow of the ink containing conventional Pigment Violet 23 causes severe reduction of gloss.

### Example 4

An energy curable, cationic, green ink formulation was formulated using the modified Pigment Yellow 12 of Example 1 and conventional Pigment Blue 15:3.

The energy curable, cationic ink was formulated from the following components.

| COMPONENTS | WEIGHT % |
|---|---|
| Cyracure® 6110^{(a)} | 64.5 |
| Modified Pigment Yellow 12 of Example 1 | 6 |
| Pigment Blue 15.3 | 10 |
| CD 1012^{(b)} | 3 |
| Heloxy^{(g)} 116^{(c)} | 15 |
| PE wax^{(d)} | 1 |
| DC -57^{(e)} | .5 |

The Cyracure® 6110, the modified Pigment Yellow 12, and the conventional Pigment Blue 15.3 were first mixed at high speed (about 1000 rpm) with a Cowles blade and then processed through a media mill containing 1 mm size media. After processing the remaining components were added and the viscosity of the two green inks were measured.

| PIGMENT | VISCOSITY @ 25°C |
|---|---|
| Modified Green Ink | 550±50 cps at 240 s⁻¹ |
| Conventional Green Ink | 750±50 cps at 240 s⁻¹ |

### Example 5

An energy curable, free radical, addition polymerizable ink formulation was formulated using a modified Pigment Red 22 containing Pigment Red 22 and rheological additive.

Modified Pigment Red 22 composition containing Pigment Red 22 and rheological additive was prepared as described in Example 5 of U.S. Patent 5,024,698. 20.2 parts of 5-nitro-o-toluidine were dissolved in 280 parts water and 42.7 parts 31% hydrochloric acid at 65°C. The volume was adjusted to 600 parts at 3 to 5°C using ice/water, and 24.6 parts of aqueous sodium nitrite solution were added. The solution was stirred for 60 minutes at 5 to 7°'C. 20.8 parts of 70% acetic acid were then added to the resultant diazo solution and the final volume was adjusted to 700 parts with the addition of ice/water.

34.7 parts of 2-naph-Lhalenecarboxamide, 3-hydroxy-N-phenyl (Naphthol AS) were dissolved in 600 parts water and 30 parts of 50% sodium hydroxide solution at 75°C. 2.0 parts of sulfated castor oil were added and the volume was adjusted to 1300 parts at 30°C.

The diazo solution was then added to the Naphthol AS solution over 25 minutes, together with 10.8 parts of azomethine coupler B of U.S. Patent 5,024,698. The mixture was stirred for 30 minutes to complete coupling and the resultant pigment slurry was heated to 90 OC., filtered, washed, and dried at 70°C. (Yield 65.7 parts of the modified Pigment Red 22 composition)

The energy curable, cationic ink was formulated from the following components.

| COMPONENTS | WEIGHT % |
|---|---|
| Ebecryl® 3701⁽ⁱ⁾ | 30 |
| Trimethylolpropane triacrylate (TMPTA) | 26.5 |
| Modified Pigment Red 22 | 15 |
| Tripropylene glycol diacrylate (TRPGDA) | 12 |
| N-vinyl pyrrolidone (N-VP) | 10 |
| Isopropyl thioxanthone (ITX) | 3 |
| Ethyl 4-(dimethylamino) benzoate (EDB) | 3 |
| Irgacure® 369^{(j)} | 2 |
| PE wax ^{(d)} | 1 |
| FC-430^{(k)} | 0.5 |

| | |
|---|---|
| (i) Ebecryl® 3701, available from the Radcure Corporation, is acrylated epoxy resin | |
| (j) Irgacure® 369, available from the Ciba Corporation is, alphaamino acetophenone | |
| (k) FC-430, available from the 3M Company, is a 40 fluorocarbon surfactant | |

The Ebecryl® 3701, TMPTA and the Modified Pigment Red 22 were mixed at high speed (about 1000 rpm) with a Cowles blade and then ground on a 3 roll mill. After grinding the remaining components were added and the 5 viscosity of the two inks were measured.

| PIGMENT | VISCOSITY @ 25°C |
|---|---|
| Modified PR-22 | 500±50 cps at 240 s-1 |
| Conventional PR-22 | 800±50 cps at 240 s-1 |

Printing runs as described in Example 1 were carried out with the modified and conventional Pigment Red 22 ink compositions except that a Cyrel® flexographic printing plate, available from E.I. du Pont de Nemours & Company, was used. Color density and gloss measurements were carried out with the modified and conventional Pigment Red 22 prints. The assessed quality using the two ink formulations were:

| PIGMENT | COLOR DENSITY | GLOSS 60° |
|---|---|---|
| Modified PR-22 | 1.73 | 85 |
| Conventional PR-22 | 1.52 | 60 |

The ink containing the modified Pigment produced higher density and gloss than the ink containing the conventional pigment.

### Example 6

An energy curable, free radical addition polymerizable ink formulation was formulated using a modified Pigment Orange 16 containing Pigment Orange 16 and rheological additive.

Modified Pigment Orange 16 composition containing Pigment Orange 16 and rheological additive was prepared as described in Example 8 of U.S. Patent 4,946,509, but with Jeffamine M2005 in place of Jeffamine M2070. Tetrazotized o-dianisidine was prepared by charging 20.9 parts of o-dianisidine to 39.8 parts of 200 Be HCl and 140 parts of an ice/water mixture with constant stirring to form a homogeneous suspension. Then 32.6 parts of 38% sodium nitrite was added and stirring continued for 1 hour at 0 to 5°C. The excess nitrous acid was destroyed by adding approximately 0.5 parts sulfamic acid.

A fine suspension of acetoacetanilide (AAA) was prepared by adding 31.7 parts AAA to 400 parts H20 and 33.6 parts of 50% aqueous NAOH. The mixture was stirred until all of the AAA was dissolved. The temperature of the solution was adjusted to 0 to 5° C by adding ice and subsequently the AAA was precipitated by slowly adding 38.5 parts of 70% acetic acid.

An azomethine coupling component was formed by adding 1.2 parts of AAA to 13.5 parts of Jeffamine M-2005 and heating the mixture between 100 and 1050C while stirring. After 1 hour, the reaction was complete as evidenced by the disappearance of the ketone absorption band in the IR spectrum at approximately 1673 cm¹ . The resulting azomethine was added to the suspension of AAA immediately prior to coupling with the tetrazotized DCB. Coupling was then carried out by adding the tetrazotized DCB to the AAA suspension over a 1 hour period. Stirring was continued until no excess tetrazo remained. Then the slurry was heated between 90 and 95 °C, stirred for 15 minutes, filtered, washed and dried at 60°C. (Yield 62.2 parts of the modified Pigment Orange 16 composition).

The energy curable, free radical addition polymerizable ink was formulated from the following components.

| COMPONENTS | WEIGHT % |
|---|---|
| Genomer® D 585^{(m)} | 40 |
| Glycerolpropoxy triacrylate (GPTA) | 10 |
| Modified Pigment Orange 16 | 15 |
| Dipropylene glycol diacrylate (DPGDA) | 26.5 |
| ITX | 3 |
| EDB | 3 |
| Irgacure® 369^{(j)} | 1 |
| PE wax^{(k)} | 1 |
| FC-430 ^{(k)} | .5 |

| | |
|---|---|
| (m) Genomer® D 585, available from Rahn Corporation, is an epoxy acrylate | |

The Genomer® D 585, GPTA and the modified Pigment Orange 16 were mixed at high speed (about 1000 rpm) with a Cowles blade then ground on a 3 roll mill. After grinding, the remaining components were added and the viscosity of the two inks were measured.

| PIGMENT | VISCOSITY @ 25°C |
|---|---|
| Modified PO-16 | 900±100 cps at 240 s⁻¹ |
| Conventional PO-16 | 1,500±100 cps at 240 s⁻¹ |

Printing runs as described in Example 5 were carried out with the modified and conventional Pigment Orange 16 ink compositions. Color density and gloss measurements were carried out with the modified and conventional Pigment Orange 16 prints. The assessed quality using the two ink formulations were:

| PIGMENT | COLOR DENSITY | GLOSS 60° |
|---|---|---|
| Modified PO-16 | 2.00 | 91 |
| Conventional PO-16 | 1.65 | 79 |

The ink containing the Modified Pigment produced a more transparent image with a cleaner shade and higher density and gloss, than did the ink containing the conventional pigment.

### Example 7

An electron beam curable, free radical addition polymerizable ink formulation was formulated using the Modified Pigment Red 22 composition of Example 5.

The electron beam curable, cationic ink was formulated from the following components.

| COMPONENTS | WEIGHT % |
|---|---|
| Ebecryl® 3701⁽ⁱ⁾ | 38 |
| Trimethylolpropane triacrylate (TMPTA) | 26.5 |
| Modified Pigment Red 22 of Example 5 | 15 |
| Tripropylene glycol diacrylate (TRPGDA) | 12 |
| N-vinyl pyrrolidone (N-VP) | 10 |
| PE wax ^{(d)} | 1 |
| FC-430^{(k)} | .5 |

The Ebecryl® 3701, TMPTA and the modified Pigment Red 22 were mixed at high speed (about 1000 rpm) with a Cowles blade then ground on a 3 roll mill. After grinding, the remaining components were added and the viscosity of the two inks were measured.

| PIGMENT | VISCOSITY @ 25°C |
|---|---|
| Modified PR-22 | 800±50 cps at 240 s⁻¹ |
| Conventional PR-22 | 1,200±100 cps at 240 s⁻¹ |

The modified Pigment Red 22 ink formulation was used to print an image on of white polyethylene film with a gloss of using a Chestnut flexographic printing press with a Cyrel® Flexographic printing plate. The printing speed was 200 Feet/min (1 m/sec.). The printing press was equipped with an electron beam unit from ESI which had an irradiation output of 3 mega rads at 165 kV. The quality of the cured printed image was comparable to the UV cured image of Example 5 using white polyethylene film.

### Example 8

The energy curable, free radical addition polymerizable ink formulation of Example 6 was used to print an image on white polyethylene film with a gloss of 40 using a Chestnut flexographic printing press with a Cyrel® flexographic printing plate. The printing speed was 200 feet/min (1 m/sec). The printing press was equipped with two curing stations through which the printed web passed. The first curing station through which the web passed as it left the printing station was a UV light unit from Prime Systems Inc. having a lamp with an output of 400 Watts/inch in the UV spectral region and a cylindrical reflector. The second curing station which was located after the first station along the path of the printed web, was a electron beam unit from which provided a beam of electrons having an irradiation output of 3 mega rads at 165 kV, which impinged on the printed surface of the web. The quality of the cured printed image was comparable to the UV cured image of Example 6 using white polyethylene film.

In practice the first curing step to UV radiation cures at least the surface of the printed ink image, and the second electron beam curing step cures the printed ink image in depth to complete the cure. By use of this hybrid curing step higher printing speeds are achieved with UV opaque ink systems. Also, better film properties, adhesion and less unreacted components are present that could migrate from the cured ink film.

### Example 9

The energy curable, cationic ink formulation of Example 2 was printed on a SBS coated board having a gloss of 16, available from James River Corporation.

Printing runs were carried out as described in Example 2. Using the Modified Pigment Blue 15:4 ink 10 composition, a uniform ink film was applied to the substrate and cured. A cured uniform ink film was likewise prepared using conventional Pigment Blue 15:4 ink composition.

Color density and gloss measurements were carried out with the modified and conventional Pigment Blue 15:4 prints. The assessed quality using the two ink formulations were:

| PIGMENT | COLOR DENSITY | GLOSS 60° |
|---|---|---|
| Modified P3-15:4 | 1.25 | 64 |
| Conventional PB-15:4 | 1.03 | 52 |

The ink containing the modified Pigment produced a more uniform image with higher density and gloss on the coated 25 board, than the ink containing the conventional pigment.

### Example 10

An energy curable, cationic ink formulation was formulated using a modified Pigment Black 7 composition containing Pigment Black 7 and rheological additive.

Modified Pigment Black 7 composition was prepared by dry mixing 19% by weight of the copper phthalocyanine derived rheological additive described in Example 2 with 81% by weight of conventional Pigment Black 7.

The ink was formulated from the following components.

| COMPONENTS | WEIGHT % |
|---|---|
| Cyracure® 6110^{(a)} | 65 |
| Modified Pigment Black 7 | 18 |
| CD 1012^{(b)} | 5 |
| Irgacure® 261^{(f)} | .5 |
| DVE 3 ^{(g)} | 5 |
| PE wax ^{(d)} | 1 |
| DC 57^{(e)} | .5 |

The Cyracure® 6110 and the modified Pigment Black 7 were mixed at high speed (about 2000 rpm) with a Cowles blade then processed through a media mill containing 1 mm size media. After processing, the remaining components were added and the viscosity of the two inks were measured.

| PIGMENT | VISCOSITY @ 25°C |
|---|---|
| Modified PR-7 | 350±50 cps at 240 s⁻¹ |
| Conventional PR-7 | 700±50 cps at 240 s⁻¹ |

Color density and gloss measurements were carried out with the modified and conventional Pigment Black 7 ink using the methods of Example 1. The assessed quality using the two ink formulations were:

| PIGMENT | COLOR DENSITY | GLOSS 60° |
|---|---|---|
| Modified PB-7 | 2.02 | 78 |
| Conventional PB-7 | 1.82 | 66 |

The ink containing the modified Pigment has a much higher density, gloss and better color jetness due to presence of the copper phthalocyanine derived rheological additive than the ink containing a conventional pigment.

Those skilled in the art having the benefit of the teachings of the present invention as hereinabove set forth, can effect numerous modifications thereto. These modifications are to be construed as being encompassed 5 within the scope of the present invention as set forth in the appended claims.

## Claims

1. An energy curable ink comprising:
a pigment;
a rheological additive having the structure:
P-(U-Y)ₛ
wherein P is the residue of an organic colorant, Y is a polyalkylene oxide moiety, U is a linking moiety covalently bonding Y to P, and s is an integer from 1 to 3 and; an energy curable liquid vehicle; wherein the ink is substantially free of a fugitive solvent.

2. The ink of claim 1 wherein the polyalkylene oxide moiety is an ethylene oxide polymer.

3. The ink of claim 1 wherein the polyalkylene oxide moiety is an ethylene oxide/propylene oxide copolymer.

4. The ink of claim 3 wherein the copolymer has the general formula: 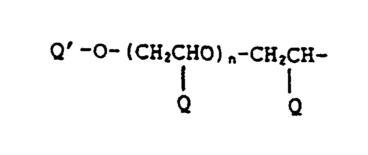 wherein n is 4 to 400; each Q is independently H or CH₃, and Q' is a C₁-C₆ alkyl moiety.

5. The ink of claim 4 wherein n is 4 to 60.

6. The ink of any one of claims 1 to 5 wherein P is a residue of an azo pigment, phthalocyanine pigment, dioxazine pigment, quinacridone pigment, perylene pigment, or perinone pigment.

7. The ink of any one of claims 1 to 6 wherein U is a covalent bond, or a multivalent moiety selected from the group consisting of C₁-C₆ alkylene -NHSO₂-, -O-, -CO-, -COO-, -N=, and -CONH-.

8. The ink of any one of claims 1 to 7 where s has the value 1 or 2.

9. The ink of claim 1 wherein the rheological additive is an azomethine having the general formula: 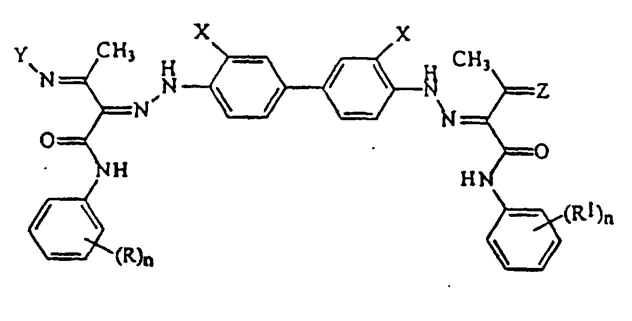 wherein Y is the alkylene oxide polymer containing 4 to 200 groups; R and R¹ are independently selected from H, CH₃, OCH₃, OCH₂CH₃ and Cl; n is an integer from 1 to 5; X is selected from Cl, CH₃, and OCH₃; and Z is selected from 0 and N-Y, or an azomethine having the general formula: 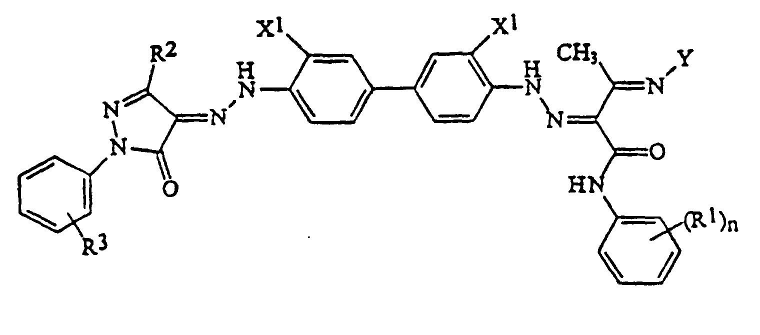 wherein Y is the polyalkylene oxide polymer containing 4 to 20 repeat units; R¹ is H, CH₃, OCH₃, OCH₂CH₃ or Cl; n is an integer from 1 to 5; R² is CH₃ or COOCH₂CH₃; R³ is H or CH₃; and X¹ is Cl or OCH₃, or a diarylide having the general formula: 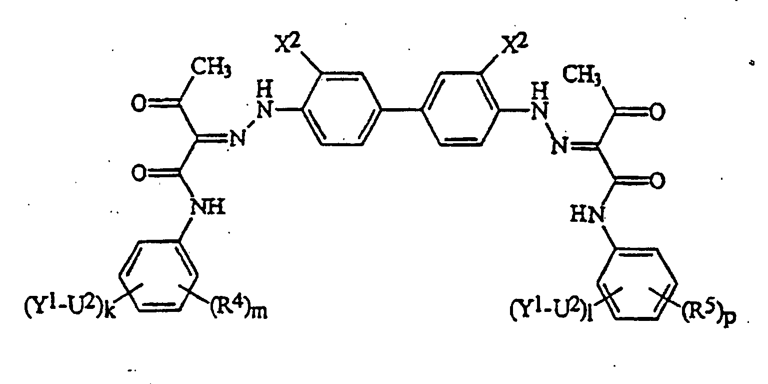 wherein: R⁴ and R⁵ are independently selected from the C₁-C₄-alkyl, C₁-C₄ alkoxy, and
halogen; m and p are independently integers of 0 to 5; X² is selected from Cl, CH₃, and
OCH₃; U² comprises a divalent bridging moiety selected from C₁-C₆ alkylene -NHSO₂- , -O- , -CO-, -COO-, and -CONH-; Y¹ comprises the polyalkylene oxide moiety having a number average molecular weight of about 200 to 10,000; and k and l are independently integers of 0 or 1, with the proviso that for at least 50 wt.% of the pigment composition, k and l are both equal to 0, and for at least 3 wt.% of the pigment composition k and/or l are equal to 1 or an azomethine having the X general formula: 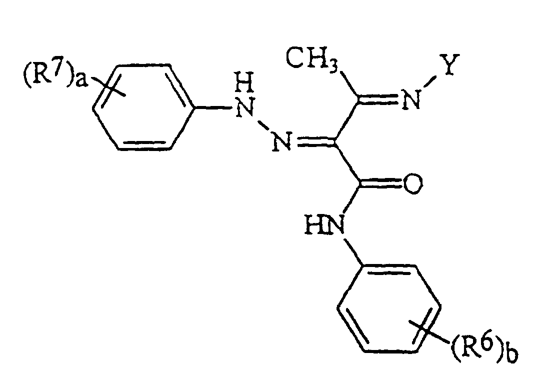 wherein Y is the polyalkylene oxide polymer containing about 4 to about 20 repeat units; R6 is independently selected from Cl, OCH₃ , CH₃, OC₂H₅, C₂H₅, and CONH₂; R⁷ is independently selected from Cl, OCH₃, CH₃, NO₂, OC₂H₅, C₂H₅, CONH₂, SO₃H, OH and COOH; and a and b are independently integers of 0 to 5 or a phthalocyanine having the general formula: 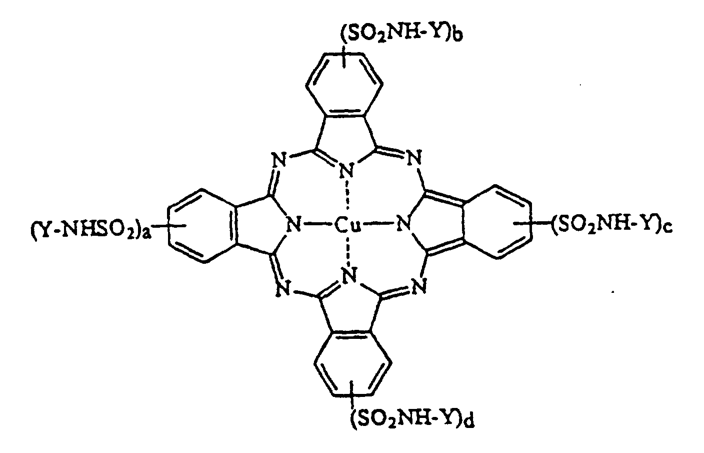 wherein Y has the general formula: 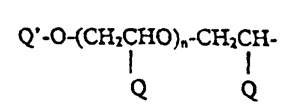 to wherein n is about 4 to about 400, and a, b, c and d are integers independently from about 0 to about 4, provided at least one of them is 1; each Q is independently H or CH₃ and Q' is a C₁-C₆ alkyl moiety.

10. The ink of any one of claims 1 to 9 wherein the pigment is selected from Pigment Yellow 1, Pigment Yellow 3, Pigment Yellow 12, Pigment Yellow 13, Pigment Yellow 14, Pigment Yellow 17, Pigment Yellow 37, Pigment Yellow 63, Pigment Yellow 65, Pigment Yellow 73, Pigment Yellow 7 4, Pigment Yellow 75, Pigment Yellow 83, Pigment Yellow 97, Pigment Yellow 98, Pigment Yellow 106, Pigment Yellow 114, Pigment Yellow 121, Pigment Yellow 126, Pigment Yellow 127, Pigment Yellow 136, Pigment Yellow 174, Pigment Yellow 176, Pigment Yellow 188, Pigment Orange 5, Pigment Orange 13, Pigment Orange 16, Pigment Orange 34, Pigment Red 2, Pigment Red 9, Pigment Red 14, Pigment Red 17, Pigment Red 22, Pigment Red 23, Pigment Red 37, Pigment Red 38, Pigment Red 41, Pigment Red 42, Pigment Red 112, Pigment Red 146, Pigment Red 170, Pigment Red 196, Pigment Red 210, Pigment Red 238, Pigment Blue 15, Pigment Blue 15:1, Pigment Blue 15:2, Pigment Blue 15:3, Pigment Blue 15:4, Pigment Green 7, Pigment Green 36, Pigment Violet 23, and Pigment Black 7.

11. The ink of claim 1 wherein the pigment is distinct from P.

12. The ink of claim 1 wherein the pigment is the same as P.

13. The ink of claim 12 wherein the ink contains an additional distinct pigment.

14. The ink of any one of claims 1 to 13 wherein the energy curable liquid vehicle is a ring opening polymerizable composition.

15. The ink of claim 14 wherein the polymerizable composition is a cationic polymerizable system comprising one or more mono-functional and/or multi-functional expoxide monomers.

16. The ink of claim 14 further comprising a polymerization initiating system activatable by actinic radiation.

17. The ink of any one of claims 1 to 13 wherein the energy curable liquid vehicle is a free radical addition polymerizable system comprising an ethylenically unsaturated monofunctional or multi-functional monomer.

18. The ink of claim 17 wherein the ink contains a free radical generating, addition Polymerization initiating system activatable by actinic radiation.

19. The ink of claim 1 wherein the ink additionally contains a surface active agent, a wax, or a combination thereof.

20. A method of printing and curing an ink image comprising the steps of:
(a) providing an energy curable ink as defined in any of claims 1 to 19
(b) printing the ink on a substrate surface to form an image; and
(c) subjecting the image to actinic radiation or thermal energy to form a cured image.

21. The method of claim 20 wherein the actinic radiation is a beam of electrons.

22. The method of claim 20 wherein the energy curable ink contains a polymerization initiating system activatable by actinic radiation, and wherein the actinic radiation is ultraviolet radiation.

23. The method of claim 22 wherein the image is initially subjected to ultraviolet radiation and subsequently subjected to a beam of electrons or thermal energy.

24. The method of claim 23 wherein the thermal energy is radiant or conductive thermal energy.

## Patentansprüche

1. Energiehärtbare Druckfarbe, umfassend: ein Pigment; einen Fließverbesserer mit der Struktur:
P-(U-Y)ₛ
wobei P der Rest eines organischen Farbmittels ist, Y eine Polyalkylenoxideinheit ist, U eine verbindende Einheit ist, welche Y kovalent an P bindet, und s eine ganze Zahl von 1 bis 3 ist; und ein energiehärtbares, flüssiges Bindemittel; wobei die Druckfarbe im Wesentlichen frei von einem flüchtigen Lösungsmittel ist.

2. Druckfarbe gemäß Anspruch 1, wobei die Polyalkylenoxideinheit ein Ethylenoxidpolymer ist.

3. Druckfarbe gemäß Anspruch 1, wobei die Polyalkylenoxideinheit ein Ethylenoxid/Propylenoxid-Copolymer ist.

4. Druckfarbe gemäß Anspruch 3, wobei das Copolymer die allgemeine Formel aufweist: 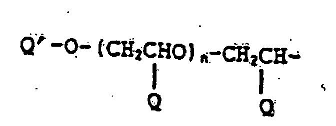 wobei n gleich 4 bis 400 ist; Q jeweils unabhängig H oder CH₃ ist und Q' eine C₁-C₆-Alkyleinheit ist.

5. Druckfarbe gemäß Anspruch 4, wobei n gleich 4 bis 60 ist.

6. Druckfarbe gemäß einem der Ansprüche 1 bis 5, wobei P ein Rest eines Azopigments, Phthalocyaninpigments, Dioxazinpigments, Chinacridonpigments, Perylenpigments oder Perinonpigments ist.

7. Druckfarbe gemäß einem der Ansprüche 1 bis 6, wobei U eine kovalente Bindung ist oder eine mehrwertige Einheit, welche aus C₁-C₆-Alkylen, -NHSO₂-, -O-, -CO-, - COO-, -N= und -CONH- ausgewählt ist.

8. Druckfarbe gemäß einem der Ansprüche 1 bis 7, wobei s den Wert 1 oder 2 aufweist.

9. Druckfarbe gemäß Anspruch 1, wobei der Fließverbesserer ein Azomethin der allgemeinen Formel: 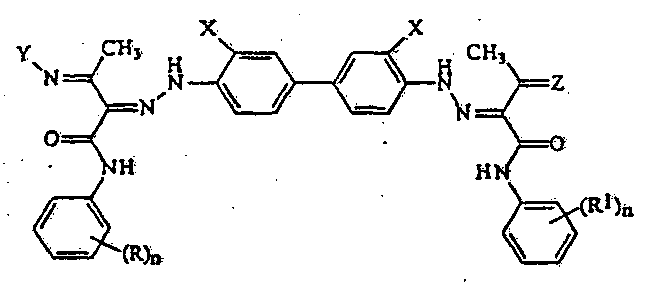 ist, wobei Y das Alkylenoxidpolymer ist, das 4 bis 200 Einheiten enthält; R und R¹ unabhängig aus H, CH₃, OCH₃, OCH₂CH₃ und Cl ausgewählt sind; n eine ganze Zahl von 1 bis 5 ist; X aus Cl, CH₃ und OCH₃ ausgewählt ist; und Z aus O und N-Y ausgewählt ist, oder ein Azomethin der allgemeinen Formel: 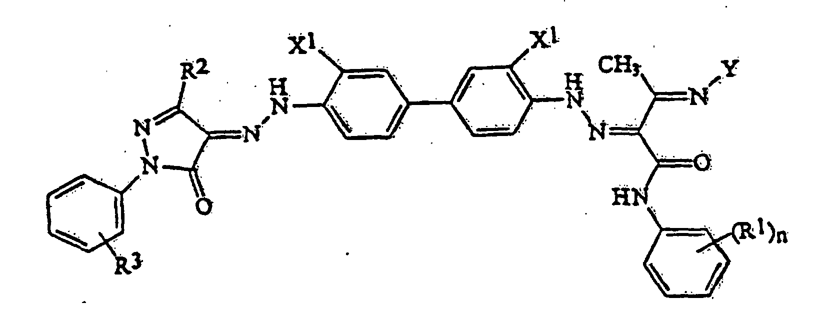 ist, wobei Y das Polyalkylenoxidpolymer ist, das 4 bis 20 sich wiederholende Einheiten enthält; R¹ H, CH₃, OCH₃, OCH₂CH₃ oder Cl ist; n eine ganze Zahl von 1 bis 5 ist; R² CH₃ oder COOCH₂CH₃ ist; R³ H oder CH₃ ist; und X¹ Cl oder OCH₃ ist, oder ein Diarylid der allgemeinen Formel: 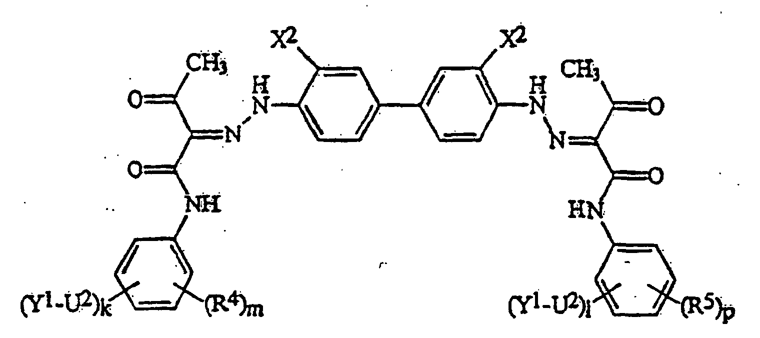 ist, wobei R⁴ und R⁵ unabhängig aus einem C₁-C₄-Alkyl-, C₁-C₄-Alkoxyrest und einem Halogenatom ausgewählt sind; m und p unabhängig ganze Zahlen von 0 bis 5 sind; X² aus Cl, CH₃ und OCH₃ ausgewählt ist; U² eine divalente verbrückende Einheit umfasst, welche aus C₁-C₆-Alkylen, -NHSO₂-, -O-, -CO-, -COO- und - CONH- ausgewählt ist; Y¹ die Polyalkylenoxideinheit umfasst, welche ein Zahlenmittel des Molekulargewichts von etwa 200 bis 10000 aufweist; und k und l unabhängig ganze Zahlen von 0 oder 1 sind, mit der Maßgabe, dass für mindestens 50 Gew.-% der Pigmentzusammensetzung k und l beide gleich 0 sind und für mindestens 3 Gew.-% der Pigmentzusammensetzung k und/oder l gleich 1 sind, oder ein Azomethin der allgemeinen Formel: 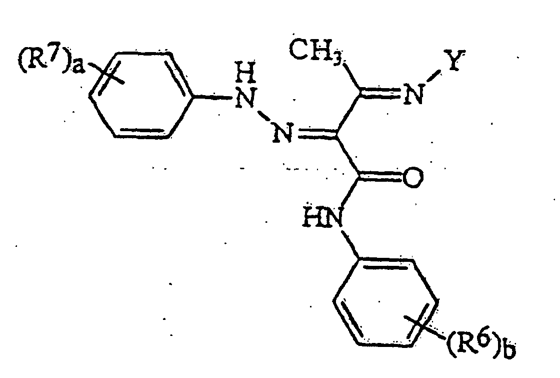 ist, wobei Y das Polyalkylenoxidpolymer ist, das etwa 4 bis etwa 20 sich wiederholende Einheiten enthält; R⁶ unabhängig aus Cl, OCH₃, CH₃, OC₂H₅, C₂H₅ und CONH₂ ausgewählt ist; R⁷ unabhängig aus Cl, OCH₃, CH₃, NO₂, OC₂H₅, C₂H₅, CONH₂, SO₃H, OH und COOH ausgewählt ist; und a und b unabhängig ganze Zahlen von 0 bis 5 sind,
oder ein Phthalocyanin der allgemeinen Formel: 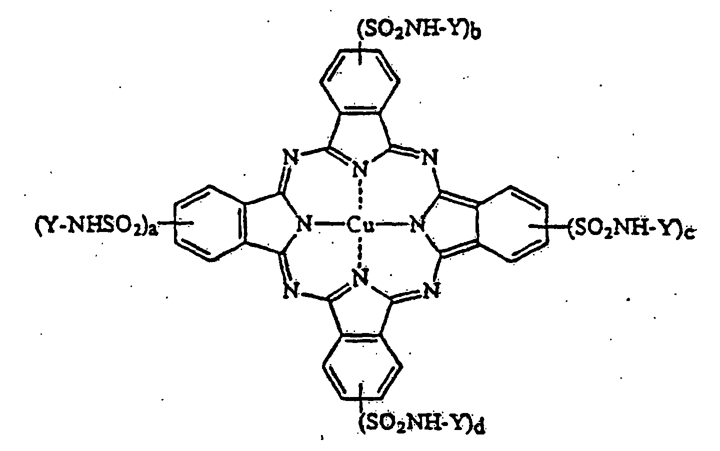 ist, wobei Y die allgemeine Formel: 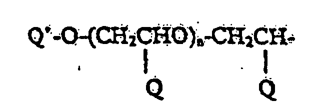 aufweist, wobei n gleich etwa 4 bis etwa 400 ist und a, b, c und d unabhängig ganze Zahlen von etwa 0 bis etwa 4 sind, vorausgesetzt dass mindestens eine von ihnen 1 ist; Q jeweils unabhängig voneinander H oder CH₃ ist; und Q' eine C₁-C₆-Alkyleinheit ist.

10. Druckfarbe gemäß einem der Ansprüche 1 bis 9, wobei das Pigment aus Pigment Gelb 1, Pigment Gelb 3, Pigment Gelb 12, Pigment Gelb 13, Pigment Gelb 14, Pigment Gelb 17, Pigment Gelb 37, Pigment Gelb 63, Pigment Gelb 65, Pigment Gelb 73, Pigment Gelb 74, Pigment Gelb 75, Pigment Gelb 83, Pigment Gelb 97, Pigment Gelb 98, Pigment Gelb 106, Pigment Gelb 114, Pigment Gelb 121, Pigment Gelb 126, Pigment Gelb 127, Pigment Gelb 136, Pigment Gelb 174, Pigment Gelb 176, Pigment Gelb 188, Pigment Orange 5, Pigment Orange 13, Pigment Orange 16, Pigment Orange 34, Pigment Rot 2, Pigment Rot 9, Pigment Rot 14, Pigment Rot 17, Pigment Rot 22, Pigment Rot 23, Pigment Rot 37, Pigment Rot 38, Pigment Rot 41, Pigment Rot 42, Pigment Rot 112, Pigment Rot 146, Pigment Rot 170, Pigment Rot 196, Pigment Rot 210, Pigment Rot 238, Pigment Blau 15, Pigment Blau 15:1, Pigment Blau 15:2, Pigment Blau 15:3, Pigment Blau 15:4, Pigment Grün 7, Pigment Grün 36, Pigment Violett 23 und Pigment Schwarz 7 ausgewählt ist.

11. Druckfarbe gemäß Anspruch 1, wobei das Pigment von P verschieden ist.

12. Druckfarbe gemäß Anspruch 1, wobei das Pigment das Gleiche wie P ist.

13. Druckfarbe gemäß Anspruch 12, wobei die Druckfarbe ein zusätzliches, verschiedenes Pigment enthält.

14. Druckfarbe gemäß einem der Ansprüche 1 bis 13, wobei das energiehärtbare flüssige Bindemittel eine unter Ringöffnung polymerisierbare Zusammensetzung ist.

15. Druckfarbe gemäß Anspruch 14, wobei die polymerisierbare Zusammensetzung ein kationisch polymerisierbares System ist, umfassend ein oder mehrere monofunktionelle und/oder multi-funktionelle Epoxidmonomere.

16. Druckfarbe gemäß Anspruch 14, welche weiterhin ein die Polymerisation initiierendes System umfasst, das durch aktinische Strahlung aktivierbar ist.

17. Druckfarbe gemäß einem der Ansprüche 1 bis 13, wobei das energiehärtbare flüssige Bindemittel ein radikalisch additions-polymerisierbares System ist, das ein ethylenisch ungesättigtes, mono-funktionelles oder multi-funktionelles Monomer umfasst.

18. Druckfarbe gemäß Anspruch 17, wobei die Druckfarbe ein Radikale bildendes, die Additionspolymerisation initiierendes System enthält, das durch aktinische Strahlung aktivierbar ist.

19. Druckfarbe gemäß Anspruch 1, wobei die Druckfarbe zusätzlich ein oberflächenaktives Mittel, ein Wachs oder eine Kombination davon enthält.

20. Verfahren zum Drucken und Härten eines Druckfarben-Bildes, umfassend die Schritte:
(a) Bereitstellen einer energiehärtbaren Druckfarbe gemäß einem der Ansprüche 1 bis 19; und
(c) Unterwerfen des Bildes einer aktinischen Strahlung oder einer thermischen Energie, um ein gehärtetes Bild zu erzeugen.

21. Verfahren gemäß Anspruch 20, wobei die aktinische Strahlung ein Elektronenstrahl ist.

22. Verfahren gemäß Anspruch 20, wobei die energiehärtbare Druckfarbe ein die Polymerisation initiierendes System enthält, das durch aktinische Strahlung aktivierbar ist, und wobei die aktinische Strahlung ultraviolette Strahlung ist.

23. Verfahren gemäß Anspruch 22, wobei das Bild anfänglich einer ultravioletten Strahlung und anschließend einem Elektronenstrahl oder einer thermischen Energie unterworfen wird.

24. Verfahren gemäß Anspruch 23, wobei die thermische Energie strahlende oder leitende, thermische Energie ist.

## Revendications

1. Encre durcissable par une énergie, comprenant :
un pigment ;
un additif rhéologique ayant la structure :
P-(U-Y)ₛ
dans laquelle P est le reste d'un colorant organique, Y est un groupe polyoxyde d'alkylène, U est un groupe liant reliant Y à P de façon covalente et s est un entier de 1 à 3 et ;
un véhicule liquide durcissable par une énergie ;
l'encre étant essentiellement exempte d'un solvant volatil.

2. Encre selon la revendication 1, dans laquelle le groupe polyoxyde d'alkylène est un polymère d'oxyde d'éthylène.

3. Encre selon la revendication 1, dans laquelle le groupe polyoxyde d'alkylène est un copolymère oxyde d'éthylène/oxyde de propylène.

4. Encre selon la revendication 3, dans laquelle le copolymère a la formule générale : 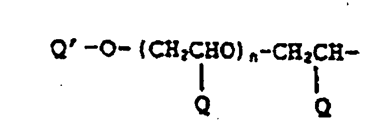 dans laquelle n est 4 à 400 ; chaque Q est indépendamment H ou CH₃, et Q' est un groupe alkyle en C₁ à C₆.

5. Encre selon la revendication 4, dans laquelle n est 4 à 60.

6. Encre selon l'une quelconque des revendications 1 à 5, dans laquelle P est un résidu d'un pigment azoïque, d'un pigment phtalocyanine, d'un pigment dioxazine, d'un pigment quinacridone, d'un pigment pérylène ou d'un pigment périnone.

7. Encre selon l'une quelconque des revendications 1 à 6, dans laquelle U est une liaison covalente, ou un groupe multivalent choisi dans le groupe constitué par un groupe alkylène en C₁ à C₆, -NHSO₂-, -O-, -CO-, -COO-, -N= et -CONH-.

8. Encre selon l'une quelconque des revendications 1 à 7, dans laquelle s a la valeur 1 ou 2.

9. Encre selon la revendication 1, dans laquelle l'additif rhéologique est une azométhine ayant la formule générale : 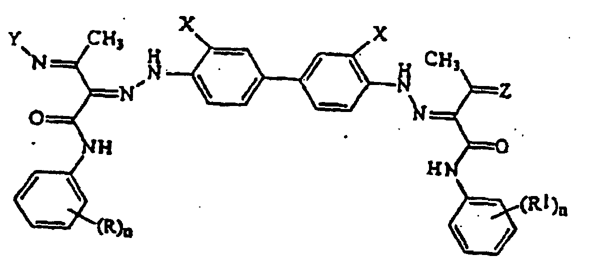 dans laquelle Y est le polymère d'oxyde d'alkylène contenant 4 à 200 groupes ; R et R¹ sont indépendamment choisis parmi H, CH₃, OCH₃, OCH₂CH₃ et Cl ; n est un entier de 1 à 5 ; X est choisi parmi Cl, CH₃ et OCH₃ ; et Z est choisi parmi O et N-Y, ou une àzométhine ayant la formule générale : 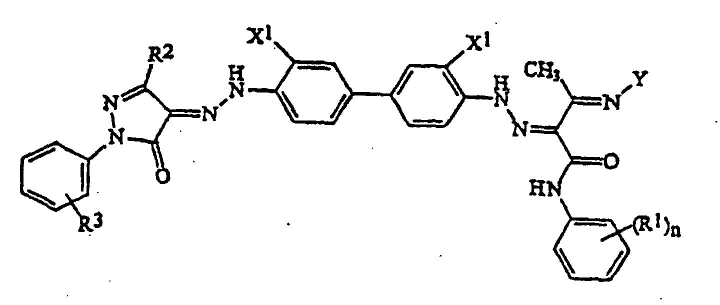 dans laquelle Y est le polymère polyoxyde d'alkylène contenant 4 à 20 motifs répétés ; R¹ est H, CH₃, OCH₃, OCH₂CH₃ ou Cl ; n est un entier de 1 à 5 ; R² est CH₃ ou COOCH₂CH₃ ; R³ est H ou CH₃ ; et X¹ est Cl ou OCH₃, ou un diarylide ayant la formule générale : 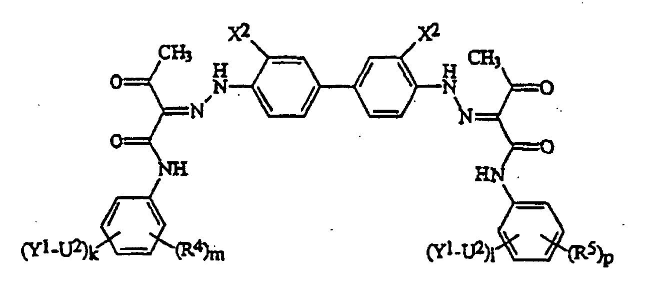 dans laquelle : R⁴ et R⁵ sont indépendamment choisis parmi un groupe alkyle en C₁ à C₄, alcoxy en C₁ à C₄ et un halogène ; m et p sont indépendamment des entiers de 0 à 5 ; X² est choisi parmi Cl, CH₃ et OCH₃ ; U² comprend un groupe pontant divalent choisi parmi un groupe alkyle en C₁ à C₆, -NHSO₂-, -O-, -CO-, -COO- et -CONH- ; Y¹ comprend le. groupe polyoxyde d'alkylène ayant un poids moléculaire moyen en nombre d'environ 200 à 10 000 ; et k et 1 sont indépendamment des entiers de 0 ou 1, étant entendu que pour au moins 50 % en poids de la composition de pigment, k et 1 sont tous les deux égaux à 0, et pour au moins 3 % en poids de la composition de pigment k et/ou 1 sont égaux à 1, ou une azométhine ayant la formule générale : 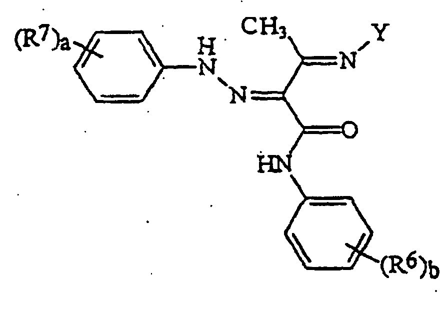 dans laquelle Y est le polymère polyoxyde d'alkylène contenant environ 4 à environ 20 motifs répétés ; R⁶ est indépendamment choisi parmi Cl, OCH₃, CH₃, OC₂H₅, C₂H₅ et CONH₂ ; R⁷ est indépendamment choisi parmi Cl, OCH₃, CH₃, NO₂, OC₂H₅, C₂H₅, CONH₂, SO₃H, OH et COOH ; et a et b sont indépendamment des entiers de 0 à 5 ou une phtalocyanine ayant la formule générale : 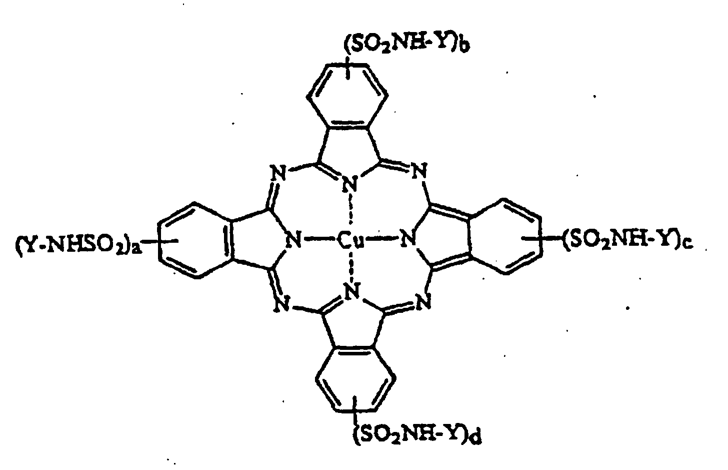 dans laquelle Y a la formule générale : 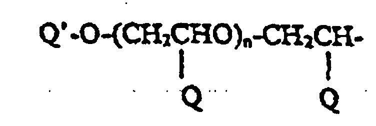 dans laquelle n est environ 4 à environ 400, et a, b, c et d sont indépendamment des entiers d'environ 0 à environ 4, étant entendu qu'au moins l'un d'eux. soit 1 ; chaque Q est indépendamment H ou CH₃ et Q' est un groupe alkyle en C₁ à C₆.

10. Encre selon l'une quelconque des revendications 1 à 9, dans laquelle le pigment est choisi parmi le pigment jaune 1, le pigment jaune 3, le pigment jaune 12, le pigment jaune 13, le pigment jaune 14, le pigment jaune 17, le pigment jaune 37, le pigment jaune 63, le pigment jaune 65, le pigment jaune 73, le pigment jaune 74, le pigment jaune 75, le pigment jaune 83, le pigment jaune 97, le pigment jaune 98, le pigment jaune 106, le pigment jaune 114, le pigment jaune 121, le pigment jaune 126, le pigment jaune 127, le pigment jaune 136, le pigment jaune 174, le pigment jaune 176, le pigment jaune 188, le pigment orange 5, le pigment orange 13, le pigment orange 16, le pigment orange 34, le pigment rouge 2, le pigment rouge 9, le pigment rouge 14, le pigment rouge 17, le pigment rouge 22, le pigment rouge 23, le pigment rouge 37, le pigment rouge 38, le pigment rouge 41, le pigment rouge 42, le pigment rouge 112, le pigment rouge 146, le pigment rouge 170, le pigment rouge 196, le pigment rouge 210, le pigment rouge 238, le pigment bleu 15, le pigment bleu 15:1, le pigment bleu 15:2, le pigment bleu 15:3, le pigment bleu 15:4, le pigment vert 7, le pigment vert 36, le pigment violet 23 et le pigment noir 7.

11. Encre selon la revendication 1, dans laquelle le pigment est distinct de P.

12. Encre selon la revendication 1, dans laquelle le pigment est le même que P.

13. Encre selon la revendication 12, l'encre contenant un pigment distinct supplémentaire.

14. Encre selon l'une quelconque des revendications 1 à 13, dans laquelle le véhicule liquide durcissable par une énergie est une composition polymérisable par ouverture de cycle.

15. Encre selon la revendication 14, dans laquelle la composition polymérisable est un système polymérisable cationique comprenant un ou plusieurs monomères époxydes monofonctionnels et/ou multifonctionnels.

16. Encre selon la revendication 14, comprenant en outre un système initiateur de polymérisation activable par radiation actinique.

17. Encre selon l'une quelconque des revendications 1 à 13, dans laquelle le véhicule liquide durcissable par une énergie est un système polymérisable par addition de radicaux libres comprenant un monomère éthyléniquement insaturé monofonctionnel ou multifonctionnel.

18. Encre selon la revendication 17, l'encre contenant un système initiateur de polymérisation par addition générant des radicaux libres activable par radiation actinique.

19. Encre selon la revendication 1, dans laquelle l'encre contient de plus un agent tensioactif, une cire ou une combinaison de ceux-ci.

20. Procédé d'impression et de durcissement d'une image d'encre, comprenant les étapes consistant :
(a) à fournir une encre durcissable par une énergie telle que définie dans l'une quelconque des revendications 1 à 19
(b) à imprimer l'encre sur une surface d'un substrat pour former une image ; et
(c) à soumettre l'image à une radiation actinique ou une énergie thermique pour former une image durcie.

21. Procédé selon la revendication 20, dans lequel la radiation actinique est un faisceau d'électrons.

22. Procédé selon la revendication 20, dans lequel l'encre durcissable par une énergie contient un système initiateur de polymérisation activable par une radiation actinique, et dans lequel la radiation actinique est une radiation ultraviolette.

23. Procédé selon la revendication 22, dans lequel l'image est initialement soumise à une radiation ultraviolette puis soumise à un faisceau d'électrons ou une énergie thermique.

24. Procédé selon la revendication 23, dans lequel l'énergie thermique est une énergie thermique rayonnante ou conductrice.
